# EUROPEAN PATENT SPECIFICATION

(11) **EP 2 254 822 B1**
(45) Date of publication and mention of the grant of the patent: **18.01.2012**
(21) Application number: 09711561.2
(22) Date of filing: 20.02.2009
(51) Int. Cl.: B66C 19/02

(54) **UPRIGHT SUPPORT FOR GANTRY**
AUFRECHTE STÜTZE FÜR BOCKKRAN
SUPPORT VERTICAL POUR PORTIQUE

(30) Priority: 20.02.2008 GB 0803120
(43) Date of publication of application: 01.12.2010
(73) Proprietor: Reid Lifting Limited, Chepstow NP16 5JG (GB)
(72) Inventor: RADMALL, Paul, Marlborough (NZ)
(74) Representative: Howell, Matthew Dafydd
(86) International application number: PCT/GB2009/000467
(87) International publication number: WO 2009/103986

(56) References cited:
- FR-A- 2 140 960
- GB-A- 149 997
- US-A- 1 352 035

## Description

This invention relates to an upright support suitable for use in a gantry, such as the one disclosed in document GB 149197.

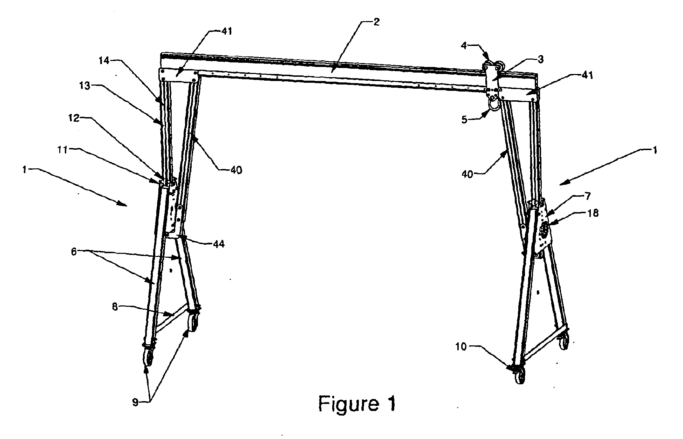

A gantry comprises two upright side frames connected by a horizontal beam supporting a beam trolley that runs along the beam and is fitted with a hoist to lift loads. Gantries are commonly made so that they are mobile to allow them to be located over loads that require lifting. For this purpose, the side frames are each fitted with wheels to contact the ground. An example of such a gantry is shown in Figure 1.

For a gantry to be portable, it is necessary to disassemble the side frames from the horizontal beam and to transport each component separately. A side frame may be readily moveable on the wheels at its base but will not be stable enough in an upright state to allow it to be moved safely, especially if it is large and heavy.

An object of the invention is to adapt the side frame of a gantry to make it more readily transportable.

According to the invention, an upright support assembly comprises a base with primary ground engaging means and a stabilising member which is pivotally connected to the support assembly so as to be moveable between a stowed position folded against the support assembly and a deployed position in which it engages the ground to hold the support assembly upright, the stabilising member carrying a ground engaging fitting at its outer end which is adapted to engage the ground in the deployed position to stabilise the support assembly in the upright position, and to engage and roll over the ground in the stowed position when the support assembly is lowered to the ground so that the base and primary ground engaging fittings can be lifted off the ground and the support assembly moved on the ground engaging fitting.

The ground engaging fitting therefore serves a dual function in stabilising the support assembly in its upright state and allowing transport of the support assembly in a lowered state.

Preferably, the supplementary ground engaging fitting comprises a castor with a directional lock that is intended to be operated to stop castoring when the support assembly is being transported in the lowered state, but which is intended to be non-operative to allow castoring when the support assembly is moved in the upright state with the stabilising member deployed.

The invention will now be described by way of example with reference to the accompanying drawings in which:
Figure 1 is a general view of a mobile gantry;
Figure 2 is a view of an upright side frame of the gantry of Figure 1 modified to incorporate a stabilising member according to the invention, shown in a stowed position;
Figure 3 is a side view of the upright side frame of Figure 2 showing how it is transportable in a lowered state, and
Figure 4 is a view of the upright side flame of Figure 2 with the stabilising member shown in a deployed position to stabilise the upright side frame in the upright position.

The gantry shown in Figure 1 comprises two upright side frames 1 connected by a horizontal beam 2 supporting a beam trolley 3 that runs along the beam on wheels 4 and has a lifting eye 5 for a hoist. The side frames 1 each comprise a pair of legs 6 joined at their top by a pair of connecting plates 7 which diverge downwards and are connected at their bottom by a tie bar 8. A castor wheel 9 is connected to the bottom of each leg 6 and is provided with a brake 10.

The legs 6 are tubular with a rectangular section and their side faces abut the plates 7 either side.

The plates 7 are of a generally triangular shape to match the profile of the diverging legs 6 and each have a pair of upwardly projecting lugs 11 at their upper end to form mounting points for a pair of guide wheels 12 located between respective pairs of lugs 11 either side of a central vertical gap between the two plates. This gap is designed to receive an upright adjustable support 13, the top of which is connected to one end of the horizontal beam 2. The support 13 is a tubular member with a substantially rectangular section and has channels 14 formed longitudinally in opposite sides. A roller link chain (not shown) is fitted in one of these channels for engagement by a drive gear (not shown) to determine the vertical position of the support 13. The drive gear is mounted on a drive spindle (not shown) between the two plates 7, and a hand wheel 18 is mounted on the spindle outboard of the outer plate 7 so as to be accessible for operation by a user to drive a drive gear (not shown) and adjust the vertical position of the support 13.

In order to increase lateral stability of the gantry, a strut member 40 is provided between the beam 2 and each side frame 1. The strut 40 comprises a tubular member similar to the support 13 and is connected at its lower end to the lower end of the support 13 where it projects below the plates 7. This connection 44 then limits the extent to which the support 13 and beam 2 can be raised vertically. The upper end of the strut 40 is connected to the beam 2 inboard of the support 13 via connection plates 41 either side.

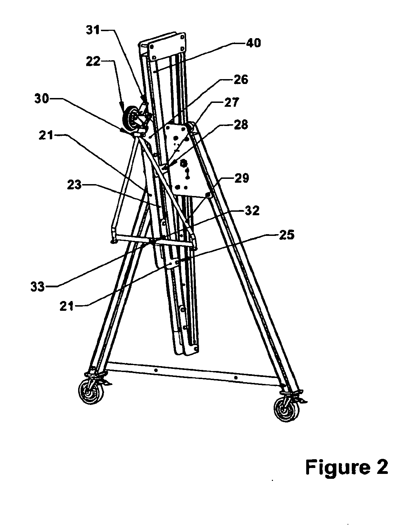

When the gantry requires transporting to another location to which it cannot be easily moved ready assembled on the wheels 9, it is disassembled by disconnecting the plates 41 from the beam 2 so that the side frames 1 and beam 2 can be transported separately. In order to assist transportation of the side frames 1, each is fitted with a stabilising assembly 20 as shown in Figures 2 to 5.

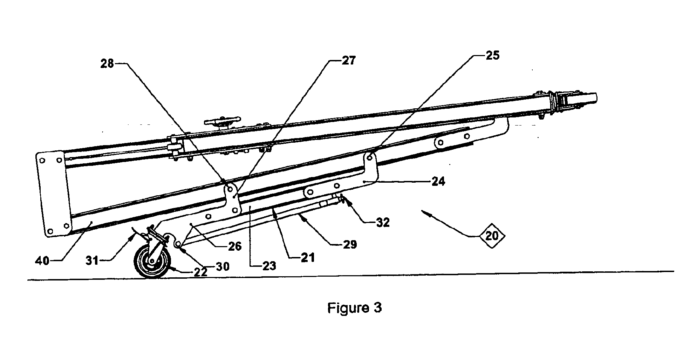

The stabilizing assembly 20 comprises a stabilising leg 21 which is pivotally connected to the strut 40 at one end and which carries a castor wheel 22 at its outer end. The stabilizing leg comprises a central tubular portion 23 with a pair of extension plates 24 either side at the inner end that embrace the strut 40 and are connected thereto by a pivot pin 25. The extension plates 24 are cranked so as to allow the leg 21 to be pivoted upwards against the strut 40 as shown in Figures 2 and 3. The castor wheel 22 is mounted on a second pair of extension plates 26 at the outer end of the tubular member 23, and a pair of lugs 27 extend laterally from the plates 26 so as to engage either side of the strut 40 when the stabilizing leg is in its stowed position folded against the strut 40. A fastening pin 28 is inserted through aligned holes in the lugs 27 and strut 40 to secure the stabilizing leg in the stowed position.

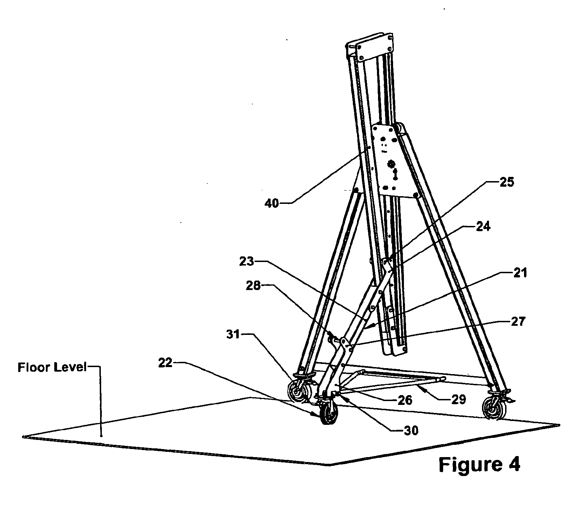

When the stabilizing leg needs to be deployed, the fastening pin 28 is removed and the leg is pivoted down to a deployed position as shown in Figure 4, and a V-shaped stay 29 is connected between the outer end of the stabilising leg and the tie bar 8 of the side frame. The stay 29 is pivotally fastened to lugs 30 on the extension plates 26 at its pointed end, and is secured by releasable fasteners 32 to the tie 8 at each end. When not in use, the stay 29 is folded up against the leg 21 and held in position by a lug and pin 33. With the stabilizing leg 21 deployed and the side frame upright, the castor wheel 22 engages the ground, and together with the castor wheels 9 of the side frame form a stable wheeled base on which the side frame can be moved freely in any direction by operators. The castor wheel 22 incorporates a directional lock 31 which is released to allow the castoring action; but which can be operated to lock the wheel against castoring for reasons explained below.

This mode of transport with the side frame 1 upright and the stabilizing leg deployed, is suitable for movement over smaller distances or in confined spaces where the side frame needs to be kept upright. However, when it is required to transport the side frame over greater distances it is more convenient and safer to release the stay 29 and fold the stabilising leg upwards into the stowed position and secure it against the strut 40 with the fastening pin 28. The side frame can then be laid down so that the castor wheel 22 engages the ground. The castor wheel is locked to prevent the castoring action. Two operators can then each take hold of the end of tie bar 8 and lift it off the ground so that the side frame is supported on the wheel 22 and can be wheeled on this to a new position. The side frame is effectively moved in the manner of a wheel barrow, and because of its low centre of gravity it is safe and easy to handle. At a new location it is then a simple matter to lock the wheels 9 and raise the side frame to the upright position for connection to the horizontal beam 2. The stabilizing leg 21 may be lowered to the deployed position to help support it whilst connecting the beam 2 if desired.

It will be appreciated that the reference to an "upright" support assembly herein, should not be construed as a limitation but only serves to describe the state of the support assembly in normal use.

## Claims

1. An upright support assembly (1) comprises a base with primary ground engaging means (9) and a stabilising member (20) which is pivotally connected to the support assembly (1) so as to be moveable between a stowed position folded against the support assembly (1) and a deployed position in which it engages the ground to hold the support assembly (1) upright, the stabilising member (20) carrying a ground engaging fitting (22) at its outer end which is adapted to engage the ground in the deployed position to stabilise the support assembly (1) in the upright position, and to engage and roll over the ground in the stowed position when the support assembly (1) is lowered to the ground so that the base and primary ground engaging means (9) can be lifted off the ground and the support assembly (1) moved on the ground engaging fitting (22).

2. An assembly as claimed in claim 1 in which the ground engaging fitting (22) engages and rolls over the ground in the deployed position.

3. As assembly as claimed in claim 2 in which the ground engaging fitting (22) comprises a castor with a directional lock (31) that is intended to be operated to stop castoring when the support assembly (1) is being transported in the lowered state, but which is intended to be released to allow castoring when the support assembly (1) is moved in the upright state with the stabilising member (20) deployed.

4. An assembly as claimed in any one of the preceding claims including a stay (29) which is releasably connectable between an outer end of a stabilizing leg (21) and the support assembly (1) to hold the stabilizing leg (21) in the deployed position.

5. An assembly as claimed in any one of the preceding claims in which the stabilizing leg (21) is lockable in the stowed position.

6. An assembly as claimed in any one of the preceding claims in the form of a side frame of a gantry.

7. A gantry having at least one side frame as claimed in claim 6.

## Patentansprüche

1. Aufrechte Stützanordnung (1), enthaltend eine Basis mit einem primären, mit dem Boden in Eingriff kommendes Mittel (9) und einem Stabilisierungselement (20), das schwenkbar so mit der Stützanordnung (1) verbunden ist, dass es zwischen einer verstauten Position, gegen die Stützanordnung (1) gefaltet, und einer ausgefahrenen Position beweglich ist, in der es mit dem Boden in Eingriff kommt, so dass es die Stützanordnung (1) aufrecht hält, wobei das Stabilisierungselement (20) an seinem äußeren Ende eine mit dem Boden in Eingriff kommende Installation (22) trägt, die dazu geeignet ist, in der ausgefahrenen Position mit dem Boden in Eingriff zu kommen, um die Stützanordnung (1) in der aufrechten Position zu stabilisieren, und in der verstauten Position mit dem Boden in Eingriff zu kommen und über diesen zu rollen, wenn die Stützanordnung (1) auf den Boden abgesenkt ist, so dass die Basis und das primäre, mit dem Boden in Eingriff kommende Mittel (9) vom Boden abgehoben und die Stützanordnung (1) auf der mit dem Boden in Eingriff kommenden Installation (22) bewegt werden kann.

2. Anordnung nach Anspruch 1, bei dem die mit dem Boden in Eingriff kommende Installation (22) in der ausgefahrenen Position mit dem Boden in Eingriff kommt und über diesen rollt.

3. Anordnung nach Anspruch 2, bei dem die mit dem Boden in Eingriff kommende Installation (22) eine Laufrolle mit einer richtungsabhängigen Sperre (31) enthält, die dazu vorgesehen ist, so betrieben zu werden, dass sie den Lauf stoppt, wenn die Stützanordnung (1) im abgesenkten Zustand transportiert wird, aber die dazu vorgesehen ist, freigegeben zu sein, um einen Lauf zu ermöglichen, wenn die Stützanordnung (1) im aufrechten Zustand mit ausgefahrenem Stabilisierungselement (20) bewegt wird.

4. Anordnung nach irgendeinem der vorherigen Ansprüche, enthaltend eine Abstützung (29), die zwischen einem äußeren Ende eines Stabilisierungsbeins (21) und der Stützanordnung (1) lösbar verbindbar ist, um das Stabilisierungsbein (21) in der ausgefahrenen Position zu halten.

5. Anordnung nach irgendeinem der vorherigen Ansprüche, bei dem das Stabilisierungsbein (21) in der verstauten Position arretierbar ist.

6. Anordnung nach irgendeinem der vorherigen Ansprüche in der Form eines Seitenrahmens eines Fahrportals.

7. Fahrportal, wenigstens einen Seitenrahmen nach Anspruch 6 aufweisend.

## Revendications

1. Un ensemble de support vertical (1) comprend une base avec des moyens primaires (9) de contact avec le sol, et un élément de stabilisation (20) qui est relié pivotant à l'ensemble de support (1) de manière à être mobile entre une position de rangement dans laquelle il est plié contre l'ensemble de support (1), et une position déployée dans laquelle il est en contact avec le sol pour tenir l'ensemble de support (1) à la verticale, l'élément de stabilisation (20) portant à son extrémité extérieure un accessoire (22) de contact avec le sol, qui est apte à venir en contact avec le sol, en position déployée, pour stabiliser l'ensemble de support (1) dans la position verticale, et à venir en contact avec le sol et à rouler sur celui-ci dans la position de rangement quand ledit ensemble de support (1) est abaissé jusqu'au sol, de telle sorte que la base et les moyens primaires (9) de contact avec le sol peuvent être soulevés du sol et l'ensemble de support (1) déplacé sur l'accessoire (22) de contact avec le sol.

2. Ensemble tel que revendiqué dans la revendication 1, dans lequel l'accessoire de contact (22) avec le sol vient en contact avec le sol et roule sur celui-ci dans la position déployée.

3. Ensemble tel que revendiqué dans la revendication 2, dans lequel l'accessoire de contact (22) avec le sol comprend une roulette pivotante avec un mécanisme de verrouillage directionnel (31) qui est destiné à être actionné pour bloquer le roulement lors du transport de l'ensemble de support (1) à l'état abaissé, mais qui est destiné à être désactivé pour permettre le roulement quand l'ensemble de support (1) est déplacé à l'état vertical, avec l'élément de stabilisation (20) déployé.

4. Ensemble tel que revendiqué dans l'une quelconque des revendications précédentes, comprenant une traverse (29) qui est apte à être placée de manière amovible entre une extrémité extérieure d'un pied de stabilisation (21) et l'ensemble de support (1) pour maintenir le pied de stabilisation (21) en position déployée.

5. Ensemble tel que revendiqué dans l'une quelconque des revendications précédentes, dans lequel le pied de stabilisation (21) est apte à être verrouillé dans la position de rangement.

6. Ensemble tel que revendiqué dans l'une quelconque des revendications précédentes, sous la forme d'un châssis latéral d'un portique.

7. Portique ayant au moins un châssis latéral tel que revendiqué dans la revendication 6.
